Europäisches Patentamt

European Patent Office

Office européen des brevets

(11) Veröffentlichungsnummer: **0 493 672 A1**

## EUROPÄISCHE PATENTANMELDUNG

(21) Anmeldenummer: **91119913.1**

(22) Anmeldetag: **22.11.91**

(51) Int. Cl.5: **B60C 17/10**

(30) Priorität: **29.12.90 DE 4042198**

(43) Veröffentlichungstag der Anmeldung:
**08.07.92 Patentblatt 92/28**

(84) Benannte Vertragsstaaten:
**DE FR GB IT**

(71) Anmelder: **Continental AG**
**Königsworther Platz 1 Postfach 1 69**
**W-3000 Hannover 1(DE)**

(72) Erfinder: **Teves, Reinhard, Dr.**
**Kurze Wende 4**
**W-3016 Seelze 6(DE)**
Erfinder: **Stevens, Hendrik, Dr.**
**Westermannwege31A**
**W-3000 Hannover 21(DE)**
Erfinder: **Theusner, Martin, Dr.**
**Franzburger Strasse 13**
**W-3007 Gehrden(DE)**
Erfinder: **Weber, Frank**
**Allensteiner Weg 6**
**W-3057 Neustadt(DE)**

(54) **Fahrzeugrad.**

(57) Die Erfindung bezieht sich auf ein für einen Pannenlauf geeignetes Fahrzeugrad mit einem Luftreifen und mit einer Felge sowie mit einem Schmiermittel zur Verminderung der Reibung zwischen Reifen und Felge bei einem Pannenlauf. Um bei einem normalen Fahrbetrieb das Schmiermittel möglichst wenig zu gefährden, wird vorgeschlagen, daß das Schmiermittel in Form von nicht aneinanderklebenden Mikrokapseln (10) lose im Reifeninnenraum vorliegt und daß die einzelne Mikrokapsel aus einem Feststoffmantel und einem darin eingebetteten flüssigen oder zähflüssigen Schmierstoff besteht.

EP 0 493 672 A1

Die Erfindung betrifft ein für einen Pannenlauf geeignetes Fahrzeugrad mit einem Luftreifen und mit einer Felge sowie mit einem Schmiermittel zur Verminderung der Reibung zwischen Reifen und Felge bei einem Pannenlauf.

Es ist bekannt, bei einem Fahrzeugrad ein Gleitmittel auf der Innenseite des Reifens unter dem Laufband anzubringen. Dies hat jedoch den Nachteil, daß das Mittel starken dynamischen Belastungen ausgesetzt wird. Die meisten Materialien wie Schaumgummi oder poriger Kunststoff halten an dieser Anbringungsstelle kein Reifenleben durch und werden vorzeitig zerstört. Lediglich technisch aufwendige mit Gerüstbildnern ausgerüstete Spezialschmierstoffe sind hier überhaupt einsetzbar. Sie zeigen jedoch Nachteile in der Umweltverträglichkeit und wiederum in der dynamischen Dauerbelastbarkeit.

Weiterhin ist es gemäß DE-OS 32 46 086 bekannt, ein Schmiermittel an der Felge anzubringen. Hier besteht jedoch das Problem, daß eine extrem starke Anbindung gewährleistet werden muß, damit das Mittel bei hohen Fahrzeuggeschwindigkeiten nicht aufgrund der Zentrifugalbeschleunigung abgerissen wird.

Der Erfindung liegt die Aufgabe zugrunde, bei einem Fahrzeugrad der eingangs genannten Art einen Weg aufzuzeigen, mit dem die geschilderten Nachteile der Anbringung eines Schmiermittels nicht mehr auftreten.

Diese Aufgabe wird erfindungsgemäß dadurch gelöst, daß das Schmiermittel in Form von nicht aneinanderklebenden Mikrokapseln lose im Reifeninnenraum vorliegt und daß die einzelne Mikrokapsel aus einem Feststoffmantel und einem darin eingebetteten flüssigen oder zähflüssigen Schmierstoff besteht.

Bisher wurde es für äußerst kritisch, wenn nicht gar unmöglich gehalten, ein Schmiermittel ohne Anbindung an die Reifeninnenwand oder an die Felge in den Innenraum eines Fahrzeugrads einzubringen. Es wurde die Gefahr gesehen, daß dies zu Unwuchten führen müsse, weil sich das Schmiermittel an einer bestimmten Stelle anlagert und nicht über die gesamte Reifeninnenfläche gleichmäßig verteilt. Bei der Erfindung ist dieses Problem auf ein erträgliches Maß reduziert worden, weil die extrem kleinen und damit leichten Kugeln, die darüber hinaus nicht aneinanderkleben, aufgrund der Fliehkräfte sich gleichmäßig an der Reifeninnenwand verteilen. Durch die Kapselung des Schmiermittels erhält man darüber hinaus den Vorteil, daß bei der Reifenmontage keine Verschmutzungen der Hände oder des Reifens auftreten. Darüber hinaus werden die inneren Reifenteile vor dem Eintritt eines Pannenlaufs nicht mit dem Schmiermittel belastet. Auch bei einem Reifenwechsel ist es in einfacher Weise möglich, das Schmiermittel zu wechseln bzw. zu erneuern.

Nachfolgend wird ein Ausführungsbeispiel der Erfindung anhand einer Zeichnung näher erläutert.

Das auf einer Fahrbahn 1 befindliche Fahrzeugrad besteht aus einem Reifen 2 und einer Felge 3. Der aus Gummi oder gummiähnlichen Kunststoffen aufgebaute Reifen 2 weist eine Radialkarkasse 30 auf, die in den Wülsten 4 durch Umschlingen von zug- und druckfesten Wulstkernen 5 verankert ist. Radial außen von der Karkasse 30 befindet sich ein üblicher Verstärkungsgürtel 6. Die einteilig ausgebildete Felge 3 endet seitlich außen in sich radial nach innen erstreckenden Felgenhörnern 7, neben denen sich auf der radial äußeren Seite Pannenlaufstützflächen 8 befinden.

Der Reifeninnenraum 9 enthält zahlreiche Mikrokapseln 10 mit dem Schmiermittel, die sich lose im Innenraum 9 bewegen können. Hierzu ist es wichtig, daß die Mikrokapseln 10 nicht aneinanderkleben. Die einzelne Mikrokapsel 10 kann z.B. aus einem Mantel auf Basis von Melamin oder Melamin-Formaldehydharz bestehen. Das eingekapselte Schmiermittel ist z.B. auf Basis von Polyethylenglycol oder Polypropylenglycol hergestellt. Selbstverständlich kommen auch Gemische mit weiteren Copolymeren in Frage. Die Mikrokapseln 10 weisen im wesentlichen Kugelform auf, und zwar mit einer Teilchengröße zwischen 5 und 50 μm. Der Schmiermittelgehalt in der Kapsel 10 beträgt in etwa 50-90% des Kapselgewichts.

Es hat sich als besonders günstig erwiesen, das Schmiermittel in einer Menge von 50 bis 500 g, bevorzugt 200 g, in den Reifeninnenraum einzubringen. Doch zeigen auch schon Mengen von 10 oder 20 g eine gewisse Schmierwirkung, und selbstverständlich sind bei Bedarf auch Mengen von mehr als 500 g einbringbar.

Beim Eintritt eines Pannenlaufs stützt sich die Reifeninnenwand auf den Pannenlaufstützflächen 8 der Felge 3 ab. Dabei werden die Mikrokapseln 10 zerquetscht, so daß das Schmiermittel austreten kann und in den gefährdeten Bereichen zwischen der Reifeninnenwand und den Pannenlaufstützflächen 8 seine Schmierwirkung entfalten kann.

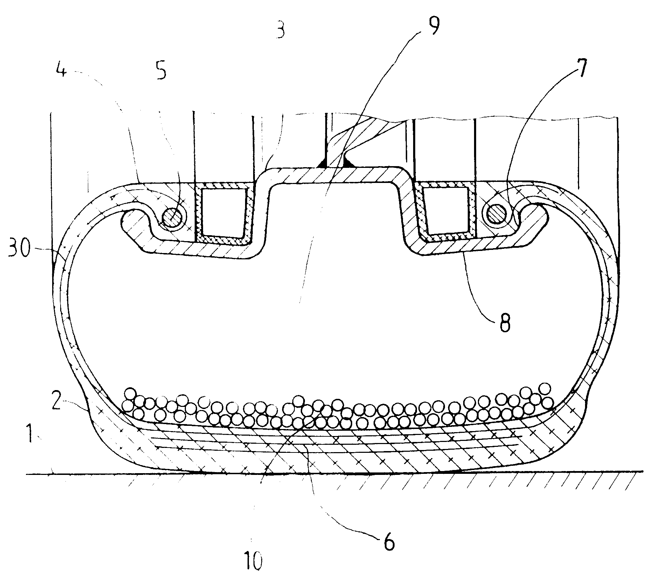

**Patentansprüche**

1. Für einen Pannenlauf geeignetes Fahrzeugrad mit einem Luftreifen und mit einer Felge sowie mit einem Schmiermittel zur Verminderung der Reibung zwischen Reifen und Felge bei einem Pannenlauf,
   **dadurch gekennzeichnet,** daß das Schmiermittel in Form von nicht aneinanderklebenden Mikrokapseln lose im Reifeninnenraum vorliegt und daß die einzelne Mikrokapsel aus einem Feststoffmantel und einem darin eingebetteten flüssigen oder zähflüssigen Schmierstoff besteht.

2. Fahrzeugrad nach Anspruch 1, dadurch gekennzeichnet, daß die einzelne Mikrokapsel aus einem Mantel auf Basis von Melamin oder Melamin-Formaldehydharz besteht, der ein Schmiermittel auf Basis von Polyethylenglycol oder Polypropylenglycol einschließt.

3. Fahrzeugrad nach Anspruch 1 oder 2, dadurch gekennzeichnet, daß der Schmiermittelgehalt 50 bis 90% des Kapselgewichts ausmacht.

4. Fahrzeugrad nach Anspruch 1, dadurch gekennzeichnet, daß die Mikrokapseln im wesentlichen Kugelform aufweisen und eine Teilchengröße zwischen 5 und 50 $\mu$m haben.

5. Fahrzeugrad nach Anspruch 1, dadurch gekennzeichnet, daß die Schmiermittelkapseln in einer Menge von 50 bis 500 g im Reifeninnenraum vorliegen.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 910 334 (J.D.GARDNER)<br>* column 2, line 10 - column 4, line 16; figure 1 *<br>--- | 1,2,5 | B60C17/10 |
| A | GB-A-2 047 736 (GENERAL TIRE)<br>* page 1, line 20 - line 50 *<br>--- | 1 | |
| D,A | DE-A-3 246 086 (CONTINENTAL)<br>* page 8, line 27 - page 9, line 5 *<br>--- | 1 | |
| A | FR-A-2 185 515 (DUNLOP)<br>* page 1, line 22 - page 6, line 22 *<br>--- | 1 | |
| A | FR-A-2 340 832 (DUNLOP)<br>* page 3, line 21 - page 12, line 15 *<br><br>----- | 2 | |

|  | TECHNICAL FIELDS SEARCHED (Int. Cl.5) |
|---|---|
|  | B60C |

The present search report has been drawn up for all claims

| Place of search | Date of completion of the search | Examiner |
|---|---|---|
| THE HAGUE | 23 MARCH 1992 | SCHMITT L.P. |

EPO FORM 1503 03.82 (P0401)